# NEUE EUROPÄISCHE PATENTSCHRIFT

(11) **EP 3 818 625 B2**
(45) Veröffentlichungstag und Bekanntmachung des Hinweises auf die Entscheidung über den Einspruch: **28.01.2026**
(45) Hinweis auf die Patenterteilung: 22.02.2023
(21) Anmeldenummer: 20734942.4
(22) Anmeldetag: 26.06.2020
(51) Int. Cl.: H02K 41/03, H02P 6/00, H02P 25/06

(54) **VERFAHREN ZUM BEWEGEN EINES LÄUFERS IN EINEM PLANARANTRIEBSSYSTEM**
METHOD FOR MOVING A ROTOR IN A PLANAR DRIVE SYSTEM
PROCÉDÉ POUR DÉPLACER UN ROTOR DANS UN SYSTÈME D'ENTRAÎNEMENT PLANAIRE

(30) Priorität: 27.06.2019 DE 102019117430
(43) Veröffentlichungstag der Anmeldung: 12.05.2021
(73) Patentinhaber: Beckhoff Automation GmbH, 33415 Verl (DE)
(72) Erfinder: PRUESSMEIER, Uwe, 32657 Lemgo (DE)
(74) Vertreter: Patentanwaltskanzlei WILHELM & BECK
(86) Internationale Anmeldenummer: PCT/EP2020/067998
(87) Internationale Veröffentlichungsnummer: WO 2020/260564

(56) Entgegenhaltungen:
- WO-A1-2013/059934
- WO-A1-2015/184553
- WO-A1-2015/184553
- WO-A1-2018/176137
- DE-A1- 102008 008 602
- DE-A1- 102008 008 602
- DE-A1- 4 305 274
- DE-A1- 4 305 274
- US-A1- 2017 225 814
- US-B1- 7 019 421
- US-B2- 10 056 279
- US-B2- 8 796 959
- "Doctoral Thesis, Massachusetts Institute of Technology", 1 June 1997, MASSACHUSETTS INSTITUTE OF TECHNOLOGY, DEPARTMENT OF ELECTRICAL ENGINEERING AND COMPUTER SCIENCE, USA, article WON-JONG KIM: "High-Precision Planar Magnetic Levitation", pages: 1 - 409, XP009556233

## Beschreibung

Die Erfindung betrifft ein Verfahren zum Bewegen eines Läufers in einem Planarantriebssystem. Ferner betrifft die Erfindung ein Computerprogramm und eine Steuereinheit zur Durchführung des Verfahrens sowie ein Planarantriebssystem.

Planarantriebssysteme können unter anderem in der Automatisierungstechnik, insbesondere der Fertigungstechnik, der Handhabungstechnik und der Verfahrenstechnik eingesetzt werden. Mittels Planarantriebssystemen kann ein bewegliches Element einer Anlage oder Maschine in mindestens zwei linear unabhängigen Richtungen bewegt oder positioniert werden. Planarantriebssysteme können einen permanenterregten elektromagnetischen Planarmotor mit einem planaren Stator und einem auf dem Stator in mindestens zwei Richtungen beweglichen Läufer umfassen.

In der deutschen Patentanmeldung DE 10 2017 131 304.4 vom 27. Dezember 2017, veröffentlicht als DE 10 2017 131 304 A1, ist ein Planarantriebssystem offenbart, bei dem ein Läufer über mehrere nebeneinander angeordnete Statormodule bewegt werden kann. Antriebsmagnetfelder werden mittels Leiterstreifen in den Statormodulen erzeugt und wechselwirken mit Permanentmagneten im Läufer derart, dass der Läufer schwebend über den Statormodulen gehalten beziehungsweise durch ein magnetisches Wanderfeld angetrieben werden kann. Das Wanderfeld kann dabei über Ränder der Statormodule hinweg übergehend auf ein angrenzendes Statormodul erzeugt werden.

Die Druckschrift WO 2015 / 184 553 A1 zeigt ein Planarantriebssystem und ein Verfahren zum Bewegen eines Läufers in einem Planarantriebssystem, bei dem ebenfalls Läufer über Statormodule bewegt werden können und Magnetfelder der Statormodule verwendet werden, um eine Horizontal-Position des Läufers zu verändern.

Die Druckschrift DE 43 05 274 A1 zeigt einen Langstator-Linearmotor, bei dem ein Läufer über mehrere Statormodule hinweg bewegt werden kann. Für den Fall, dass zwei Statormodule beabstandet zueinander angeordnet sind, sieht diese Druckschrift vor, ein Magnetfeld in einem Bereich des durch die beabstandete Anordnung gebildeten Spalts zu erhöhen.

Eine Aufgabe der vorliegenden Erfindung ist es, ein verbesserstes Antriebsverfahren für ein Planarantriebssystem bereitzustellen, bei dem ein Läufer über einen zwischen zwei Statormodulen angeordneten Spalt bewegt werden kann. Ferner ist es eine Aufgabe der vorliegenden Erfindung, ein Computerprogramm und eine Steuereinheit zur Ausführung des Verfahrens sowie ein Planarantriebssystem bereitzustellen.

Diese Aufgaben werden durch das Verfahren, das Computerprogramm, die Steuereinheit sowie das Planarantriebssystem der unabhängigen Patentansprüche gelöst. Weiterbildungen sind in den abhängigen Ansprüchen angegeben.

Zum generellen Aufbau von Statormodulen und Läufern, Statorsegmenten und Leiterstreifen sowie zur Bestromung der Leiterstreifen, um mittels durch die Bestromung der Leiterstreifen erzeugter Magnetfelder einen Läufer über einer Statorfläche zu halten beziehungsweise mittels eines Wanderfeldes anzutreiben wird auf die Beschreibung der deutschen Patentanmeldung DE 10 2017 131 304.4, insbesondere auf die Beschreibung der Figuren 1, 2, 10, 11 und 12 verwiesen.

Liegt zwischen zwei Statormodulen ein Spalt vor, so kann es trotz des Spaltes möglich sein, einen Läufer von einem ersten Statormodul zu einem zweiten Statormodul über den Spalt zu bewegen. Die vorliegende Patentanmeldung beschäftigt sich mit einem Verfahren zum Bewegen eines Läufers in einem Planarantriebssystem über einen Spalt zwischen zwei Statormodulen. Das Planarantriebssystem weist also mindestens ein erstes Statormodul, mindestens ein zweites Statormodul und mindestens einen Läufer auf, wobei das erste Statormodul und das zweite Statormodul beabstandet zueinander angeordnet sind und ein Spalt zwischen dem ersten Statormodul und dem zweiten Statormodul ausgebildet ist. Durch das erste Statormodul kann ein erstes Magnetfeld erzeugt werden. Durch das zweite Statormodul kann ein zweites Magnetfeld erzeugt werden. Das erste Magnetfeld beziehungsweise das zweite Magnetfeld können den Läufer beabstandet zu einer Oberfläche des ersten Statormoduls und des zweiten Statormoduls in einer Vertikal-Position halten, wobei der Läufer dann über dem ersten Statormodul beziehungsweise dem zweiten Statormodul schwebt. Hierbei weisen das erste Magnetfeld beziehungsweise das zweite Magnetfeld eine erste Magnetfeldstärke auf, mit der der Läufer in der Vertikal-Position gehalten werden kann. Durch die erste Magnetfeldstärke entsteht also eine erste Kraft auf den Läufer, insbesondere auf im Läufer angeordnete Permanentmagnete, die der Gewichtskraft des Läufers und einer eventuellen Beladung des Läufers entspricht. Das erste Magnetfeld und das zweite Magnetfeld können ferner zur Veränderung einer Horizontal-Position des Läufers genutzt werden, beispielsweise indem das erste Magnetfeld und/oder das zweite Magnetfeld als magnetisches Wanderfeld ausgestaltet sind. Das erste Statormodul weist einen ersten Nahbereich angrenzend an den Spalt auf. Wenn der Läufer über den Spalt bewegt wird, weist das erste Magnetfeld im ersten Nahbereich eine zweite Magnetfeldstärke auf, die größer als die erste Magnetfeldstärke ist. Ferner weist das erste Magnetfeld eine dritte Magnetfeldstärke in einem ersten Fernbereich vom Spalt auf, wenn der Läufer über den Spalt bewegt wird. Der erste Fernbereich ist beabstandet zum Spalt angeordnet. Die dritte Magnetfeldstärke ist kleiner als die erste Magnetfeldstärke, so dass eine fehlende Magnetkraft auf den Läufer im Bereich des Spaltes ausgeglichen wird.

Unter Vertikal-Position ist im Allgemeinen die Position des Läufers senkrecht zur Oberfläche des Statormoduls zu verstehen. Folglich beschreibt, bei einer Montage eines Statormoduls parallel zu einer vertikalen Wand im Raum, die Änderung der Vertikal-Position des Läufers eine Bewegung des Läufers horizontal im Raum. Analog beschreibt die Horizontal-Position im Allgemeinen die Position des Läufers parallel zur Oberfläche des Statormoduls. Folglich beschreibt die Änderung der Horizontal-Position des Läufers bei einer Montage eines Statormoduls an einer vertikalen Wand eine vertikal im Raum verlaufende Bewegung. Unter waagerecht Halten des Läufers wird im folgenden ein Halten des Läufers parallel zur Oberfläche eines Statormoduls verstanden. Bei einer Wandmontage eines Statormoduls ist unter parallel Halten des Läufers ein senkrecht im Raum Halten des Läufers gemeint. Des Weiteren ist unter paralleler Ausrichtung des Läufers zur Oberfläche eines Statormoduls ebenfalls eine Kippung des Läufers von bis zu 5° zwischen der Oberfläche des Statormoduls und dem Läufer zu verstehen. Solche Kippungen können zum Beispiel zum Ausgleich einer Beschleunigung einer Flüssigkeit in einem Gefäß auf dem Läufer verwendet werden, um ein Herausschwappen der Flüssigkeit aus dem Gefäß durch eine Beschleunigung zu vermeiden.

Wird der Läufer über den Spalt bewegt, befindet sich ein Teil des Läufers über dem Spalt. Da sich im Bereich des Spaltes keine Leiterstreifen zur Erzeugung eines Magnetfelds befinden, wird der Läufer über dem Spalt nicht durch ein entsprechendes Magnetfeld gestützt. Wird im ersten Nahbereich des ersten Statormoduls das erste Magnetfeld mit der zweiten Magnetfeldstärke erzeugt, also im Vergleich zur ersten Magnetfeldstärke verstärkt, kann hierdurch die über dem Spalt fehlende Kraft kompensiert und der Läufer weiter in der Vertikal-Position gehalten werden. Der Läufer wird also nahe am Spalt durch eine stärkere magnetische Kraft unterstützt um die fehlende Kraft im Bereich des Spaltes auszugleichen.

Dadurch, dass die dritte Magnetfeldstärke kleiner als die erste Magnetfeldstärke ist, kann die über dem Spalt fehlende Kraft weiter kompensiert und der Läufer in der Vertikal-Position gehalten werden. Der Läufer wird also nahe am Spalt durch eine stärkere magnetische Kraft unterstützt und zusätzlich entfernt vom Spalt weniger stark durch eine magnetische Kraft unterstützt. Dadurch kann es gelingen, den Läufer in einer Position parallel zur Oberfläche der Statormodule zu halten obwohl der Läufer teilweise über dem Spalt angeordnet ist.

In einer Ausführungsform des Verfahrens übt das erste Magnetfeld im ersten Fernbereich eine Kraft auf den Läufer aus, die in umgekehrte Richtung zu der Kraft im Nahbereich wirkt. Dies kann beispielsweise durch ein entsprechendes Bestromen von Leiterstreifen im Fernbereich erfolgen, wobei im Gegensatz zur vorhergehenden Ausführungsform eine Stromrichtung umgedreht wird, beziehungsweise eine Polung des Leiterstreifens geändert wird. Dadurch kann das Kippmoment, welches auf den Läufer wirkt wenn sein Schwerpunkt, bzw. sein gemeinsamer Schwerpunkt mit einem transportierten Produkt, über dem Spalt angeordnet ist, kompensiert werden und der Läufer in einer Position parallel zur Oberfläche der Statormodule gehalten werden.

In einer Ausführungsform des Verfahrens ist der Läufer in einer Ausgangsposition komplett über dem ersten Statormodul angeordnet und in einer ersten Zwischenposition teilweise über dem ersten Statormodul und teilweise über dem Spalt angeordnet. Das erste Magnetfeld ist dabei, während sich der Läufer in der Ausgangsposition befindet, über eine Ausdehnung des Läufers nahezu homogen und weist die erste Magnetfeldstärke auf. Das erste Magnetfeld kann auch in der Ausgangsposition leicht inhomogen sein, da beispielsweise auch eine asymmetrische Beladung des Läufers mit einem Produkt ausgeglichen werden muss. Unter homogen ist hier der gleichbleibende Betrag der Magnetfeldstärke mittig unter den Permanentmagneten des Läufers gemeint. Während sich der Läufer in der ersten Zwischenposition befindet, weist das erste Magnetfeld im ersten Nahbereich die zweite Magnetfeldstärke und damit eine deutliche Inhomogenität auf.

In der Ausgangsposition wird der Läufer also mittels einer durch das erste Magnetfeld erzeugten Kraft in der Vertikal-Position gehalten, wobei die Kraft über die Ausdehnung des Läufers konstant ist. Die Formulierung, dass die Kraft über die Ausdehnung des Läufers konstant ist und die Formulierung, dass das erste Magnetfeld über eine Ausdehnung des Läufers nahezu homogen ist, können also synonym verwendet werden und haben eine identische Bedeutung. Erst wenn der Läufer in die erste Zwischenposition bewegt wird, wird das erste Magnetfeld im ersten Nahbereich verstärkt, indem es nun im ersten Nahbereich die zweite Magnetfeldstärke aufweist.

In einer Ausführungsform des Verfahrens ist der Läufer in einer zweiten Zwischenposition teilweise über dem ersten Statormodul, teilweise über dem Spalt und teilweise über dem zweiten Statormodul angeordnet. Das erste Magnetfeld und das zweite Magnetfeld können den Läufer waagrecht bzw. parallel zur Oberfläche der Statormodule halten, während sich der Läufer in der zweiten Zwischenposition befindet. Der Läufer kann einerseits dadurch waagrecht gehalten werden, dass das zweite Magnetfeld des zweiten Statormoduls in einem zweiten Nahbereich angrenzend an den Spalt ebenfalls die zweite Magnetfeldstärke aufweist. Alternativ hierzu kann der Läufer waagrecht gehalten werden, indem das zweite Magnetfeld des zweiten Statormoduls in einem zweiten Nahbereich angrenzend an den Spalt und das erste Magnetfeld des ersten Statormoduls im ersten Nahbereich die erste Magnetfeldstärke aufweisen, wenn sich der Läufer in der zweiten Zwischenposition befindet.

Es kann also ausreichend sein, das erste Magnetfeld und das zweite Magnetfeld homogen mit der ersten Magnetfeldstärke auszugestalten, wenn sich der Läufer in der zweiten Zwischenposition befindet. Alternativ können das erste Magnetfeld und das zweite Magnetfeld im ersten Nahbereich beziehungsweise im zweiten Nahbereich mit der zweiten Magnetfeldstärke ausgestaltet sein, wenn sich der Läufer in der zweiten Zwischenposition befindet. Dies ermöglicht, eine aufgrund des Spalts reduzierte Tragkraft für den Läufer zumindest teilweise auszugleichen. Die erste Magnetfeldstärke des ersten Magnetfeldes und die erste Magnetfeldstärke des zweiten Magnetfeldes können unterschiedliche Beträge aufweisen, wenn sich der Läufer in der zweiten Zwischenposition befindet. Analog können die zweite Magnetfeldstärke des ersten Magnetfeldes und die zweite Magnetfeldstärke des zweiten Magnetfeldes unterschiedliche Beträge aufweisen, wenn sich der Läufer in der zweiten Zwischenposition befindet.

In einer Ausführungsform des Verfahrens ist der Läufer in einer dritten Zwischenposition teilweise über dem zweiten Statormodul und teilweise über dem Spalt angeordnet, wobei das zweite Statormodul einen zweiten Nahbereich angrenzend an den Spalt aufweist und wobei das zweite Magnetfeld im zweiten Nahbereich die zweite Magnetfeldstärke aufweist, wenn sich der Läufer in der dritten Zwischenposition befindet.

In der dritten Zwischenposition befindet sich der Läufer also nicht mehr über dem ersten Statormodul und wird lediglich von dem zweiten Magnetfeld des zweiten Statormoduls in der Vertikal-Position gehalten. Da das zweite Magnetfeld im zweiten Nahbereich mit der zweiten Magnetfeldstärke ausgestaltet ist, kann durch diese Verstärkung des Magnetfelds der Läufer weiter in der Vertikal-Position gehalten werden. Die auf den Läufer wirkenden Kräfte können dabei analog zu den Kräften in der ersten Zwischenposition sein.

Zusätzlich kann es vorgesehen sein, analog zu den für das erste Statormodul beschriebenen Ausgestaltungen des ersten Magnetfelds das zweite Magnetfeld in einem zweiten Fernbereich mit der dritten Magnetfeldstärke auszugestalten, wenn der Läufer über den Spalt bewegt werden soll. Der zweite Fernbereich ist beabstandet zum Spalt angeordnet. Hierbei kann ebenfalls im zweiten Fernbereich eine Kraft erzeugt werden, die in umgekehrte Richtung zu der Kraft im zweiten Nahbereich wirkt.

In einer Ausführungsform des Verfahrens ist der Läufer in einer Endposition komplett über dem zweiten Statormodul angeordnet. Während sich der Läufer in der Endposition befindet kann das zweite Magnetfeld über eine Ausdehnung des Läufers nahezu homogen sein. Der Läufer befindet sich nun komplett über dem zweiten Statormodul und wird durch das nahezu homogene zweite Magnetfeld in der Vertikal-Position parallel und beabstandet zur Oberfläche des zweiten Statormoduls gehalten.

In einer weiteren Ausführungsform des Verfahrens kann das erste Magnetfeld und das zweite Magnetfeld beim Übergang des Läufers zwischen der Ausgangsposition, der ersten Zwischenposition, der zweiten Zwischenposition, der dritten Zwischenposition und/oder der Endposition im ersten und/oder zweiten Fernbereich und/oder im ersten und/oder zweiten Nahbereich dynamisch zwischen der ersten, zweiten, dritten und/oder weiteren Magnetfeldstärken wechseln. Dies hat den Vorteil, dass zum Beispiel bei dem Übergang des Läufers zwischen der Ausgangsposition und der ersten Zwischenposition der Läufer parallel zur Oberfläche des ersten Statormoduls gehalten werden kann.

In einer Ausführungsform des Verfahrens wird eine Positionsbestimmung des Läufers mittels im ersten Statormodul und/oder im zweiten Statormodul verbauten Positionsdetektoren durchgeführt. Eine Ansteuerung des ersten Statormoduls zur Einstellung des ersten Magnetfelds und eine Ansteuerung des zweiten Statormoduls zur Einstellung des zweiten Magnetfelds erfolgt anhand der Positionsbestimmung des Läufers. Die Positionsdetektoren können dabei als Magnetfeldsensoren ausgestaltet sein. Die Positionsbestimmung kann dann anhand einer Messung eines durch Permanentmagneten des Läufers erzeugten Läufermagnetfelds erfolgen. Eine solche Positionsbestimmung ist in der deutschen Patentanmeldung DE 10 2017 131 320.6 vom 27. Dezember 2017, veröffentlicht als DE 10 2017 131 320 A1, offenbart.

In einer Ausführungsform des Verfahrens enthält das erste Statormodul erste bestrombare Leiter und das zweite Statormodul zweite bestrombare Leiter. Ein Bestromen der ersten bestrombaren Leiter führt zur Ausbildung des ersten Magnetfelds. Ein Bestromen der zweiten bestrombaren Leiter führt zur Ausbildung des zweiten Magnetfelds. Das erste Magnetfeld und das zweite Magnetfeld können dabei mit den beschriebenen Magnetfeldstärken ausgeführt werden, indem beim Bestromen der ersten bestrombaren Leiter beziehungsweise der zweiten bestrombaren Leiter eine Stromstärke eingestellt wird, die zu der erste Magnetfeldstärke, der zweiten Magnetfeldstärke und optional zur dritten Magnetfeldstärke führen können. Die bestrombaren Leiter können dabei als Leiterbahnen ausgestaltet sein.

Ferner umfasst die Erfindung ein Computerprogramm, umfassend Programmcode, der ausgeführt auf einem Computer diesen dazu veranlasst, das beschriebene Verfahren zur Ansteuerung eines Planarantriebssystems durchzuführen.

Zusätzlich umfasst die Erfindung eine Steuereinheit zur Ansteuerung eines Planarantriebssystems, umfassend eine Recheneinheit und Kommunikationsmittel. Die Kommunikationsmittel sind zum Einlesen von Signalen von Positionsdetektoren von Statormodulen und zum Ausgeben von Steuerungssignalen für die Statormodule eingerichtet. Die Recheneinheit ist eingerichtet ist, die Steuersignale nach dem beschriebenen Verfahren zu erzeugen Die Steuereinheit ist eingerichtet, anhand der Signale der Positionsdetektoren und einem für einen Läufer vorgegebenen Fahrweg über einen zwischen zwei Statormodulen angeordneten Spalt hinweg ein Steuerungssignal zur Steuerung von Magnetfeldern der Statormodule an die Statormodule derart auszugeben, dass die durch die Statormodule erzeugten Magnetfelder während einer Überquerung des Spalts zumindest zeitweise variiert werden können. Ferner ist die Steuereinheit eingerichtet, eines der beschriebenen Verfahren auszuführen. In diesem Fall kann das variierte Magnetfeld die zweite Magnetfeldstärke aufweisen und gegenüber der ersten Magnetfeldstärke verstärkt sein oder die dritte Magnetfeldstärke aufweisen und gegenüber der ersten Magnetfeldstärke abgeschwächt sein oder eine Magnetfeldstärke aufweisen, die eine Kraft auf den Läufer ausübt, die in umgekehrter Richtung zu der Kraft der ersten Magnetfeldstärke wirkt.

Außerdem umfasst die Erfindung ein Planarantriebssystem mit mindestens zwei beabstandet zueinander angeordneten Statormodulen, mindestens einem Läufer und mindestens einer solchen Steuereinheit. Eine maximale Spaltbreite kann dabei von Abmessungen der Statormodule abhängig sein und beispielsweise maximal 20 Prozent einer räumlichen Ausdehnung der Statormodule betragen. Alternativ kann die maximale Spaltbreite einer Magnetisierungsperiodenlänge entsprechen. In einer weiteren Alternative kann vorgesehen sein, dass bestrombare Leiter innerhalb der Statormodule Statorsegmente mit einer vorgegebenen Segmentbreite bilden und die maximale Spaltbreite der vorgegebenen Segmentbreite entspricht. Dabei kann es vorgesehen sein, in einem Statorsegment sechs Leiterstreifen eines Dreiphasensystems anzuordnen.

Die Erfindung wird nachfolgend anhand von Ausführungsbeispielen und unter Bezugnahme auf Figuren näher erläutert. Dabei zeigen jeweils in schematischer Darstellung
- Fig. 1: eine isometrische Ansicht eines Planarantriebssystems;
- Fig. 2: einen Querschnitt durch das Planarantriebssystem;
- Fig. 3: einen Ausschnitt einer Seitenansicht des Planarantriebssystems mit einem Läufer in einer Ausgangsposition;
- Fig. 4: einen Ausschnitt einer Seitenansicht des Planarantriebssystems mit einem Läufer in einer ersten Zwischenposition;
- Fig. 5: einen Ausschnitt einer Seitenansicht des Planarantriebssystems mit einem Läufer in einer zweiten Zwischenposition;
- Fig. 6: einen Ausschnitt einer Seitenansicht des Planarantriebssystems mit einem Läufer in einer dritte Zwischenposition;
- Fig. 7: einen Ausschnitt einer Seitenansicht des Planarantriebssystems mit einem Läufer in einer Endposition;
- Fig. 8: einen Ausschnitt einer weiteren Seitenansicht des Planarantriebssystems mit einem Läufer in der ersten Zwischenposition;
- Fig. 9: einen Ausschnitt einer weiteren Seitenansicht des Planarantriebssystems mit einem Läufer in der ersten Zwischenposition; und
- Fig. 10: einen Ausschnitt einer weiteren Seitenansicht des Planarantriebssystems mit einem Läufer in der zweiten Zwischenposition.

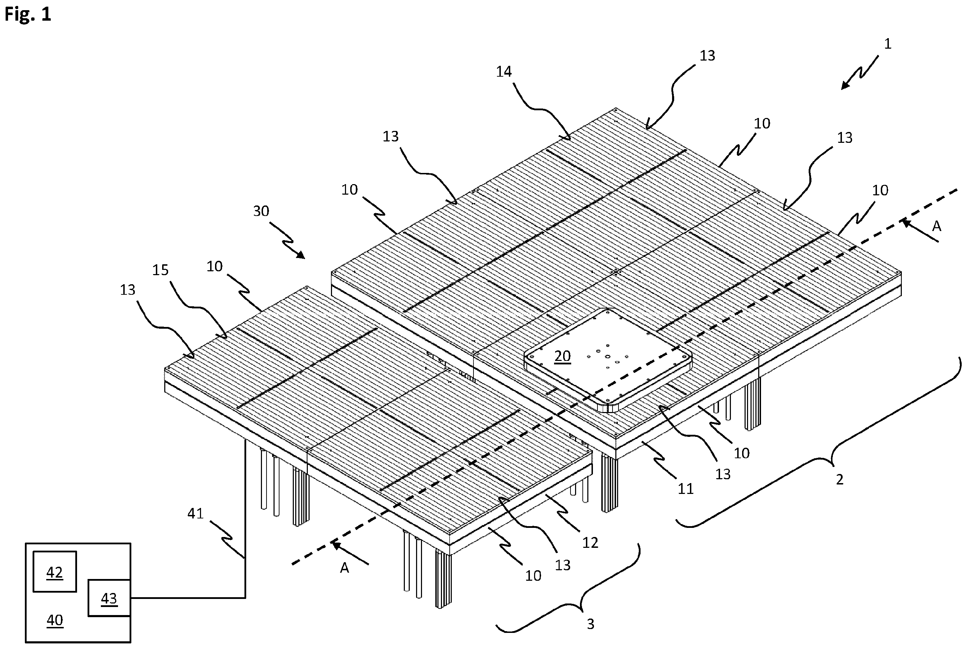

Fig. 1 zeigt eine isometrische Ansicht eines Planarantriebssystems 1 bestehend aus mehreren Statormodulen 10 und einem Läufer 20. Die Statormodule 10 können dabei jeweils wie in der deutschen Patentanmeldung DE 10 2017 131 304.4 vom 27. Dezember 2017 beschrieben ausgestaltet sein. Insbesondere können die Statormodule 10 die in dieser Patentanmeldung beschriebenen Leiterstreifen zur Erzeugung von Magnetfeldern und/oder magnetischen Wanderfeldern aufweisen. Die Magnetfelder können dabei dazu genutzt werden, den Läufer 20 beabstandet zu den Statormodulen 10 in einer Vertikal-Position zu halten und mittels des Wanderfelds zu bewegen. Ferner kann es vorgesehen sein, dass das Planarantriebssystem 1 mehr als einen Läufer 20 enthält, in Fig. 1 ist jedoch nur ein Läufer 20 dargestellt. Das Planarantriebssystem 1 ist in einen ersten Bereich 2 und einen zweiten Bereich 3 unterteilt. Im ersten Bereich 2 weist das Planarantriebssystem 1 vier Statormodule 10 auf. Im zweiten Bereich 3 weist das Planarantriebssystem 1 zwei Statormodule 10 auf. Zwischen dem ersten Bereich 2 und dem zweiten Bereich 3 ist ein Spalt 30 angeordnet.

Die Statormodule 10 weisen jeweils eine Statoroberfläche 13 auf. Der Läufer 20 kann oberhalb der Statoroberflächen 13 bewegt werden. Die Statoroberflächen 13 bilden im ersten Bereich 2 und im zweiten Bereich 3 jeweils eine durchgehende Bewegungsfläche, im ersten Bereich 2 eine erste Bewegungsfläche 14, im zweiten Bereich 3 eine zweite Bewegungsfläche 15. Im Bereich des Spalts 30 ist keine Statoroberfläche 13 angeordnet, da im Bereich des Spalts 30 die Statormodule 10 beabstandet zueinander angeordnet sind und dadurch die zu den Statormodulen 10 im ersten Bereich 2 zugehörigen Statoroberflächen 13 der ersten Bewegungsfläche 14 und die zu den Statormodulen 10 im zweiten Bereich 3 zugehörigen Statoroberflächen 13 der zweiten Bewegungsfläche 15 durch den Spalt 30 ebenfalls voneinander beabstandet sind. Die erste Bewegungsfläche 14 ist also durch den Spalt 30 von der zweiten Bewegungsfläche 15 getrennt.

Die Statormodule 10 sind mittels Kommunikationsleitungen 41 mit einer Steuereinheit 40 verbunden. Die Steuereinheit 40 kann dabei eingerichtet sein, Steuerbefehle an die Statormodule 10 auszugeben. Dazu kann die Steuereinheit 40 Kommunikationsmittel 43 aufweisen, die beispielsweise als Kommunikationsschnittstelle ausgestaltet sind. Die Steuereinheit 40 kann eine Recheneinheit 42 aufweisen. Anhand der Steuerbefehle können ausgewählte Leiterstreifen der Statormodule 10 bestromt werden, wobei anhand der Steuerbefehle auch eine Stromstärke und/oder Ausgangsleistung beeinflusst werden und so eine Magnetfeldstärke eingestellt werden kann. Die Steuerbefehle können dabei von der Recheneinheit 42 erzeugt werden, wenn die Steuereinheit 40 im erfindungsgemäßen Verfahren verwendet wird. Insbesondere kann die Recheneinheit dabei Zugriff auf ein in einem lesbaren Speicher gespeichertes Computerprogramm haben, wobei der Speicher eine Festplatte, eine CD, eine DVD, einen USB-Stick oder ein anderes Speichermedium umfassen kann.

Der Läufer 20 ist dabei über einem ersten Statormodul 11 angeordnet. Das erste Statormodul 11 grenzt an den Spalt 30 an. Auf einer dem Spalt 30 gegenüberliegenden Seite ist ein zweites Statormodul 12 angeordnet. Das erste Statormodul 11 ist also der ersten Bewegungsfläche 14 zugeordnet, das zweite Statormodul 12 ist der zweiten Bewegungsfläche 15 zugeordnet. Mittels des erfindungsgemäßen Verfahrens wird es ermöglicht, den Läufer 20 vom ersten Statormodul 11 zum zweiten Statormodul 12 zu bewegen, wobei der Läufer 20 aufgrund dieser Bewegung den Spalt 30 überquert und somit von der ersten Bewegungsfläche 14 zur zweiten Bewegungsfläche 15 gelangt.

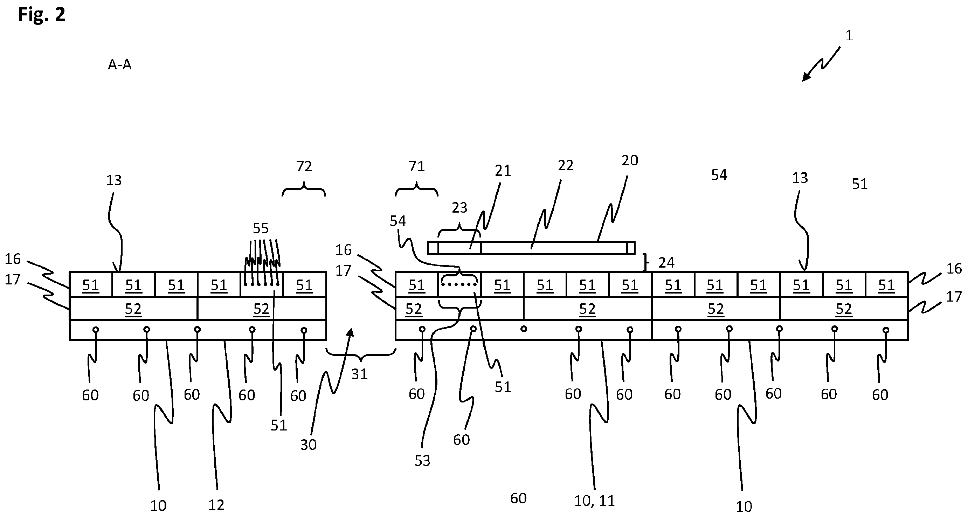

Fig. 2 zeigt einen Querschnitt durch das Planarantriebssystem 1 der Fig. 1 entlang einer in Fig.1 gezeigten Schnittebene A-A. Der Läufer weist eine erste Magneteinheit 21 und eine zweite Magneteinheit 22 auf, die wie in der deutschen Patentanmeldung DE 10 2017 131 304.4 vom 27. Dezember 2017 beschrieben ausgestaltet sind. Eine Magnetisierungsperiode 23 entspricht in ihrer räumlichen Ausdehnung einer Abmessung der ersten Magneteinheit 21. Die Statormodule 10 weisen eine erste Statorlage 16 und eine zweite Statorlage 17 auf, die rechtwinklig übereinander liegen wie in der deutschen Patentanmeldung DE 10 2017 131 304.4 vom 27. Dezember 2017 beschrieben. In der ersten Statorlage 16 sind dabei erste Statorsegmente 51 angeordnet, die jeweils eine Segmentbreite 53 aufweisen, wobei die Segmentbreite 53 der Magnetisierungsperiode 23 entspricht. Innerhalb des Querschnitts eines Statormoduls 10 sind jeweils sechs erste Statorsegmente 51 und jeweils zwei dazu rechtwinklige zweite Statorsegmente 52 dargestellt, wobei die zweiten Statorsegmente 52 die zweite Statorlage 17 bilden. Insgesamt weisen die Statormodule 10 jeweils zwölf erste Statorsegmente 51 und zwölf zweite Statorsegmente 52 auf, wobei in der Fig. 2 nicht alle ersten Statorsegmente 51 und zweiten Statorsegmente 52 dargestellt sind. Innerhalb der ersten Statorsegmente 51 beziehungsweise der zweiten Statorsegmente 52 kann jeweils ein Dreiphasensystem mit sechs Leiterstreifen wie in der deutschen Patentanmeldung DE 10 2017 131 304.4 vom 27. Dezember 2017 beschrieben angeordnet sein und zur Erzeugung eines Magnetfelds dienen. In einem der ersten Statorsegmente 51 des ersten Statormoduls 11 sind exemplarisch sechs erste bestrombare Leiterstreifen 54 dargestellt, auch die weiteren ersten Statorsegmente 51 und die zweiten Statorsegmente 52 des ersten Statormoduls 11 können entsprechend ausgestaltet sein. Das durch die ersten bestrombaren Leiterstreifen 54 erzeugte Magnetfeld kann den Läufer 20 in einer Vertikal-Position 24 halten und in Form eines Wanderfelds eine Bewegung des Läufers 20 parallel zu den Statoroberflächen 13 erzeugen. In einem der ersten Statorsegmente 51 des zweiten Statormoduls 12 sind exemplarisch sechs zweite bestrombare Leiterstreifen 55 dargestellt, auch die weiteren ersten Statorsegmente 51 und die zweiten Statorsegmente 52 des zweiten Statormoduls 12 können entsprechend ausgestaltet sein. Das durch die zweiten bestrombaren Leiterstreifen 55 erzeugte Magnetfeld kann den Läufer 20 in einer Vertikal-Position 24 halten und in Form eines Wanderfelds eine Bewegung des Läufers 20 parallel zu den Statoroberflächen 13 erzeugen.

Die Statormodule 10 weisen ferner Positionsdetektoren 60 auf, mit denen ein Permanentmagnetfeld der ersten Magneteinheit 21 beziehungsweise der zweiten Magneteinheit 22 detektiert werden kann und so Rückschlüsse auf eine Position des Läufers 20 möglich sind.

Der Spalt 30 weist eine Spaltbreite 31 auf, die der Magnetisierungsperiode 23 beziehungsweise der Segmentbreite 53 entsprechen kann, kleinere Spaltbreiten 31 jedoch ebenfalls möglich sind. Eine minimale Spaltbreite kann einen Millimeter betragen oder einem minimalen vorgegebenen Bruchteil der Magnetisierungsperiode 23 beziehungsweise der Segmentbreite 53 entsprechen, beispielsweise zehn Prozent der Magnetisierungsperiode 23 beziehungsweise der Segmentbreite 53. Das erste Statormodul 11 weist einen ersten Nahbereich 71 angrenzend an den Spalt 30 auf. Der erste Nahbereich 71 entspricht in seiner Ausdehnung der Segmentbreite 53, kann jedoch auch breiter oder schmaler als die Segmentbreite 53 ausgestaltet sein.

Wird der Läufer 20 im Planarantriebssystem 1 über den Spalt 30 bewegt, wird durch das erste Statormodul 11 ein erstes Magnetfeld und durch das zweite Statormodul 12 ein zweites Magnetfeld erzeugt. Das erste Magnetfeld beziehungsweise das zweite Magnetfeld halten den Läufer 20 beanstandet zu einer Oberfläche des ersten Statormoduls 11 und des zweiten Statormoduls 12 in einer Vertikal-Position 24, wobei die Oberfläche der Statoroberfläche 13 entsprechen kann. Das erste Magnetfeld beziehungsweise das zweite Magnetfeld weisen eine erste Magnetfeldstärke auf, wobei ein Magnetfeld mit der ersten Magnetfeldstärke geeignet ist, den Läufer 20 in der Vertikal-Position 24 zu halten. Zusätzlich werden das erste Magnetfeld und das zweite Magnetfeld zur Veränderung einer Horizontal-Position des Läufers 20 verwendet. Wenn der Läufer 20 über den Spalt 30 bewegt wird, weist das erste Magnetfeld im ersten Nahbereich 71 eine zweite Magnetfeldstärke auf, die größer als die erste Magnetfeldstärke ist.

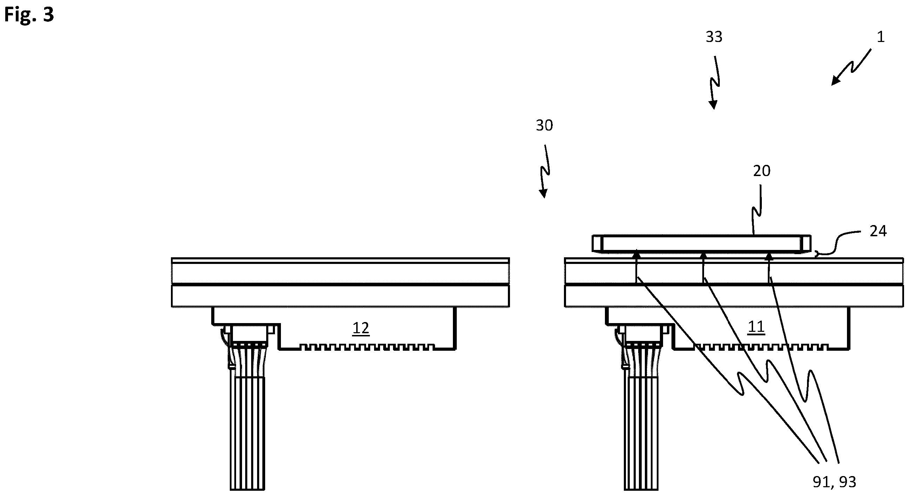

Fig. 3 zeigt einen Ausschnitt einer Seitenansicht des Planarantriebssystems mit einem Läufer in einer Ausgangsposition 33, bei dem der Läufer 20 in einer Ausgangsposition 33 komplett über dem ersten Statormodul 11 angeordnet ist. Das Planarantriebssystem 1, das erste Statormodul 11, das zweite Statormodul 12 sowie der Läufer sind dabei wie in den Fig. 1 und 2 gezeigt angeordnet. Ein erstes Magnetfeld 91, dargestellt durch Pfeile ist eingerichtet, den Läufer 20 in der Vertikal-Position 24 über dem ersten Statormodul 11 zu halten. Das erste Magnetfeld 91 weist dabei eine erste Magnetfeldstärke 93 auf, die nahezu homogen über die Ausdehnung des Läufers 20 ist. Dies wird dadurch symbolisiert, dass die Pfeile, die das erste Magnetfeld 91 symbolisieren, eine identische Länge aufweisen. Das erste Magnetfeld 91 kann dabei durch die für Fig. 2 beschriebenen ersten Statorsegmente 51 und zweiten Statorsegmente 52 erzeugt werden und mit der ersten Magneteinheit 21 beziehungsweise der zweiten Magneteinheit 22 des Läufers 20 wechselwirken. Das erste Magnetfeld 91 kann als Wanderfeld ausgestaltet werden, wobei der Läufer 20 aufgrund des Wanderfelds auf den Spalt 30 zubewegt wird.

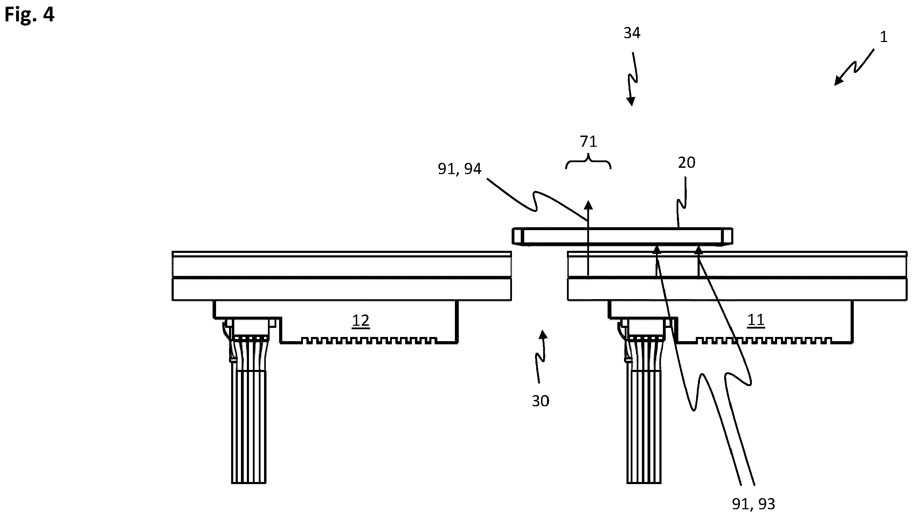

Fig. 4 zeigt das Planarantriebssystem 1 der Fig. 3 nachdem der Läufer 20 auf den Spalt 30 zubewegt wurde und sich nun in einer ersten Zwischenposition 34 befindet. In der ersten Zwischenposition 34 befindet sich der Läufer 20 teilweise über dem ersten Statormodul 11 und teilweise über dem Spalt 30, nicht jedoch über dem zweiten Statormodul 12. Das erste Magnetfeld 91 weist nun im ersten Nahbereich 71 eine zweite Magnetfeldstärke 94 auf, wobei die zweite Magnetfeldstärke 94 größer als die erste Magnetfeldstärke 93 ist. Außerhalb des ersten Nahbereichs 71 ist das erste Magnetfeld 91 mit der ersten Magnetfelsstärke 93 ausgebildet.

Im ersten Nahbereich 71 ist das erste Magnetfeld 91 also verstärkt, um mittels einer dadurch im ersten Nahbereich 71 auf den Läufer 20 erzeugten Magnetkraft, die sich aus einer Wechselwirkung zwischen den ersten Statorsegmenten 51 und den zweiten Statorsegmenten 52 einerseits und den ersten Magneteinheiten 21 und den zweiten Magneteinheiten 22 andererseits ergibt, auszugleichen, dass der Läufer 20 über dem Spalt 30 nicht mehr durch entsprechende Magnetkräfte getragen wird. Das im ersten Nahbereich 71 verstärkte erste Magnetfeld 91 kann dabei derart ausgestaltet sein, dass der Läufer 20 in einer waagrechten Position gehalten wird. Die zweite Magnetfeldstärke 94 kann dabei von einem vom Läufer 20 getragenen Gewicht abhängen.

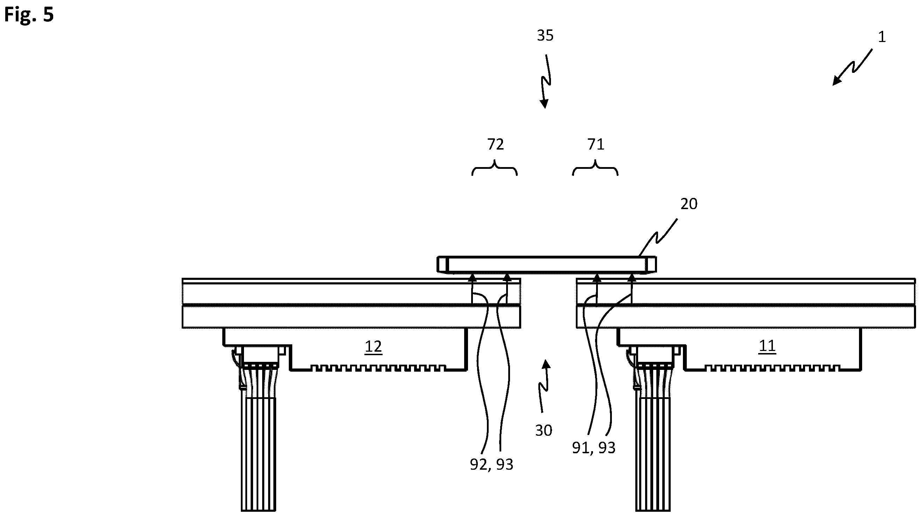

Fig. 5 zeigt das Planarantriebssystem 1 der Fig. 3 und 4 nachdem der Läufer 20 in eine zweite Zwischenposition 35 bewegt wurde, wobei der Läufer 20 in der zweiten Zwischenposition 35 über dem ersten Statormodul 11, dem zweiten Statormodul 12 und dem Spalt 30 angeordnet ist. Das erste Magnetfeld 91 weist sowohl im ersten Nahbereich 71 als auch außerhalb des ersten Nahbereichs 71 die erste Magnetfeldstärke 93 auf. Ein zweites Magnetfeld 92 des zweiten Statormoduls 12 weist sowohl in einem zweiten Nahbereich 72 als auch außerhalb des zweiten Nahbereichs 72 ebenfalls die erste Magnetfeldstärke 93 auf, so dass der Läufer 20 in der zweiten Zwischenposition 35 waagrecht gehalten werden kann. Bei einer ungleichmäßigen Beladung des Läufers 20 oder bei einer asymmetrischen Positionierung des Läufers 20 über dem Spalt 30 in der zweiten Zwischenposition 35 kann die erste Magnetfeldstärke 93 des ersten Magnetfeldes 91 auch von der ersten Magnetfeldstärke 93 des zweiten Magnetfeldes 92 abweichen.

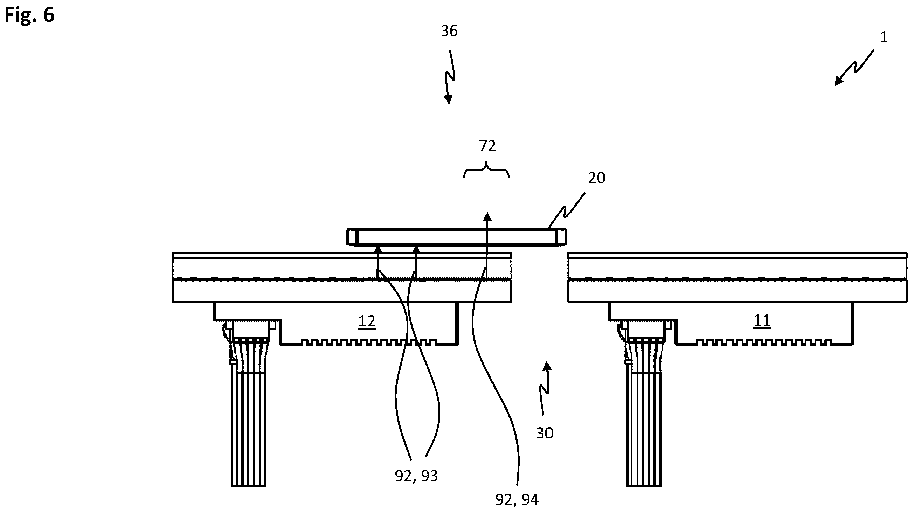

Fig. 6 zeigt das Planarantriebssystem 1 der Fig. 3 bis 5 nachdem der Läufer 20 in eine dritte Zwischenposition 36 bewegt wurde. In der dritten Zwischenposition 36 befindet sich der Läufer 20 teilweise über dem zweiten Statormodul 12 und teilweise über dem Spalt 30, nicht jedoch über dem ersten Statormodul 11. Das zweite Magnetfeld 92 weist im zweiten Nahbereich 72 die zweite Magnetfeldstärke 94 auf, die wiederum größer als die erste Magnetfeldstärke 93 ist. Außerhalb des zweiten Nahbereichs 72 ist das zweite Magnetfeld 92 mit der ersten Magnetfelsstärke 93 ausgebildet.

Im zweiten Nahbereich 72 ist das zweite Magnetfeld 92 also verstärkt, um mittels einer dadurch im zweiten Nahbereich 72 auf den Läufer 20 erzeugten Magnetkraft, die sich aus einer Wechselwirkung zwischen den ersten Statorsegmenten 51 und den zweiten Statorsegmenten 52 einerseits und den ersten Magneteinheiten 21 und den zweiten Magneteinheiten 22 andererseits ergibt, auszugleichen, dass der Läufer 20 über dem Spalt 30 nicht mehr durch entsprechende Magnetkräfte getragen wird. Das im zweiten Nahbereich 72 verstärkte zweite Magnetfeld 92 kann dabei derart ausgestaltet sein, dass der Läufer 20 in einer waagrechten Position gehalten werden kann. Die zweite Magnetfeldstärke 94 kann dabei von einem vom Läufer 20 getragenen Gewichts abhängen.

In der dritten Zwischenposition 36 beziehungsweise der ersten Zwischenposition 34 der Fig. 4 wird der Läufer 20 also waagrecht gehalten indem das zweite Magnetfeld 92 beziehungsweise das erste Magnetfeld 91 im ersten Nahbereich 71 beziehungsweise im zweiten Nahbereich 72 verstärkt wird, wobei die Verstärkung des Magnetfelds in den Darstellungen der Fig. 4 und 6 identisch ist. Ist der Läufer 20 ungleichmäßig beladen, kann die Verstärkung auch entsprechend angepasst sein, so dass das zweite Magnetfeld 92 im zweiten Nahbereich 72 eine weitere zweite Magnetfeldstärke aufweist, die von der zweiten Magnetfeldstärke 94 abweicht und größer als die erste Magnetfeldstärke 93 ist.

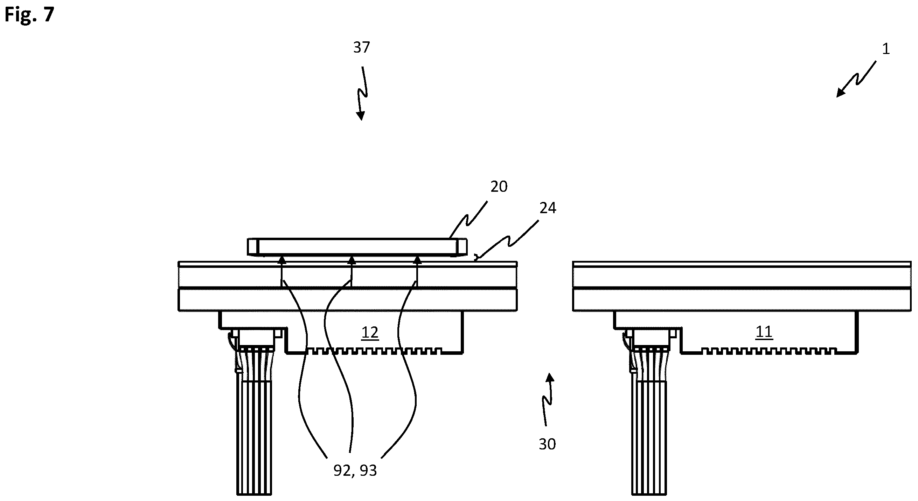

Fig. 7 zeigt das Planarantriebssystem 1 der Fig. 3 bis 6, bei dem sich der Läufer 20 in eine Endposition 37 weiterbewegt hat. In der Endposition 37 ist der Läufer 20 komplett über dem zweiten Statormodul 12 angeordnet und wird vom zweiten Magnetfeld 92 mit der ersten Magnetfeldstärke 93 in der Vertikal-Position 24 gehalten und hat sich somit im Verlauf der Fig. 3 bis 7 über den Spalt 30 bewegt. Hier ist das zweite Magnetfeld 92 wieder nahezu homogen, da der Läufer 20 komplett über dem zweiten Statormodul 12 angeordnet ist.

Die in Fig. 1 gezeigte Steuereinheit 40 ist eingerichtet, das beschriebene Verfahren durchzuführen. Dabei kann es vorgesehen sein, dass mittels der Kommunikationsleitungen 41 Steuersignale an die Statormodule 10 ausgegeben werden, wobei eine Bestromung der in Fig. 2 gezeigten ersten Statorsegmente 51 beziehungsweise zweiten Statorsegmente 52 derart erfolgt, dass die in den Fig. 3 bis 7 gezeigten ersten Magnetfeldstärken 93 und zweiten Magnetfeldstärken 94 eingestellt werden. Hierzu kann die Steuereinheit 40 ein entsprechendes Computerprogramm aufweisen.

In einem Ausführungsbeispiel des Verfahrens wird mit den in Fig. 2 gezeigten Positionsdetektoren 60 eine Position des Läufers 20 ermittelt und diese Position ebenfalls bei der Einstellung der ersten Magnetfeldstärken 93 und zweiten Magnetfeldstärken 94 berücksichtigt. Hierzu kann die Steuereinheit 40 Kommunikationsmittel 43 aufweisen, mit denen Signale der Positionsdetektoren ausgelesen werden können.

In einem weiteren Ausführungsbeispiel enthalten die ersten Statorsegmente 51 beziehungsweise die zweiten Statorsegmente 52 Leiterstreifen 54 wie in der deutschen Patentanmeldung DE 10 2017 131 304.4 vom 27. Dezember 2017 beschrieben, wobei die ersten Magnetfeldstärken 93 und die zweiten Magnetfeldstärken 94 mittels einer Steuerung der Bestromung dieser Leiterstreifen 54 eingestellt werden können und wobei die Steuereinheit 40 eingerichtet ist, entsprechende Steuerbefehle auszugeben.

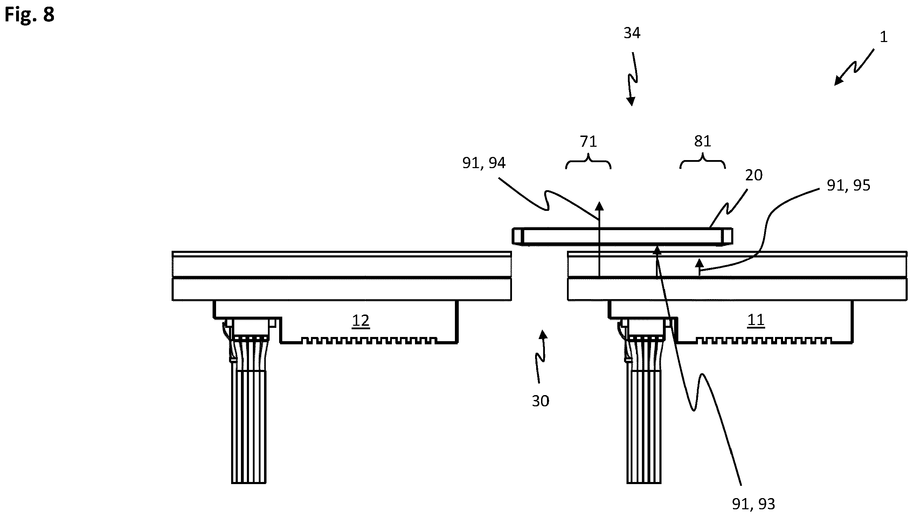

Fig. 8 zeigt das Planarantriebssystem 1 der Fig. 4 mit dem Läufer 20 in der ersten Zwischenposition 34, wobei das erste Statormodul 11 zusätzlich einen ersten Fernbereich 81 beabstandet zum Spalt 30 aufweist. Im ersten Fernbereich 81 weist das erste Magnetfeld 91 eine dritte Magnetfeldstärke 95 auf, die kleiner als die erste Magnetfeldstärke 93 ist. Dadurch kann die fehlende Magnetkraft auf den Läufer 20 im Bereich des Spalts 30 weiter ausgeglichen werden, da der Läufer 20 im ersten Fernbereich 81 eine kleinere anhebende Kraft erfährt als im Ausführungsbeispiel der Fig. 4.

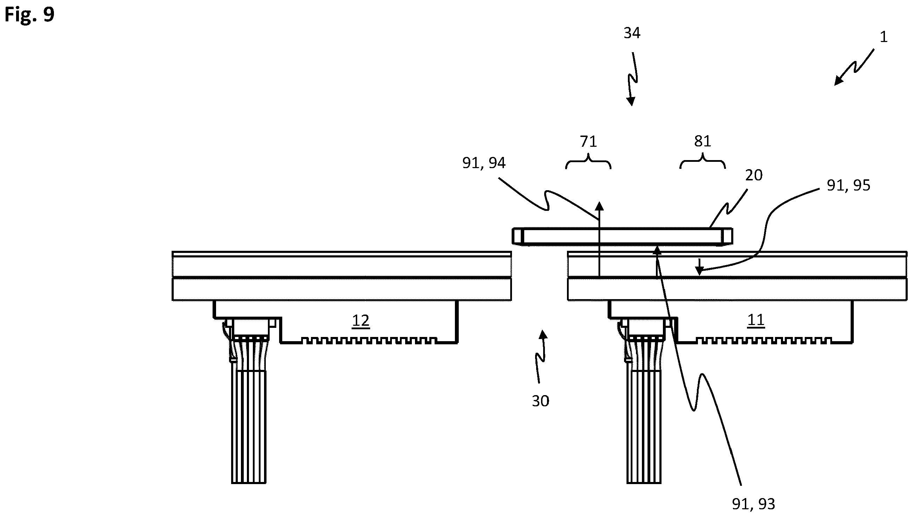

Fig. 9 zeigt das Planarantriebssystem 1 der Fig. 8, wobei die dritte Magnetfeldstärke 95 derart ausgestaltet ist, dass der Läufer 20 aufgrund der dritten Magnetfeldstärke 95 im ersten Fernbereich 81 eine anziehende Kraft erfährt, also eine Kraft in Richtung des ersten Statormoduls 11. Dadurch kann die fehlende Magnetkraft auf den Läufer 20 im Bereich des Spalts 30 im Vergleich zu Fig. 8 noch weiter ausgeglichen werden und das Kippmoment, welches auf den Läufer wirkt wenn sein Schwerpunkt, bzw. sein gemeinsamer Schwerpunkt mit einem transportierten Produkt, über dem Spalt angeordnet ist, kompensiert werden und der Läufer in einer Position parallel zur Oberfläche des ersten Statormoduls 11 gehalten werden.

Die in den Fig. 8 und 9 gezeigten ersten Magnetfeldstärken 93, zweiten Magnetfeldstärken 94 und dritten Magnetfeldstärken 95 des ersten Magnetfelds 91 können analog auch für das zweite Magnetfeld 92 der Fig. 6 vorgesehen sein, wenn sich der Läufer 20 in der dritten Zwischenposition 36 befindet.

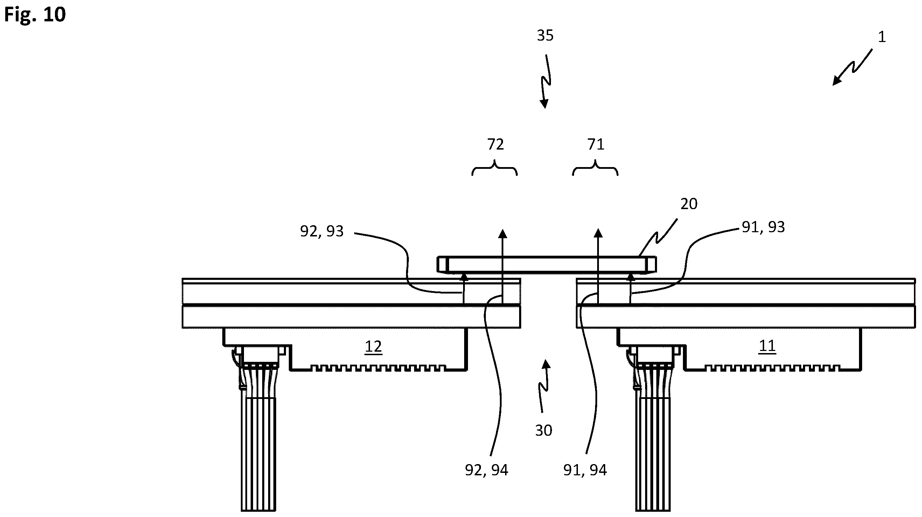

Fig. 10 zeigt das Planarantriebssystem 1 der Fig. 5 mit dem Läufer 20 in der zweiten Zwischenposition 35, bei dem das erste Magnetfeld 91 im ersten Zwischenbereich 71 die zweite Magnetfeldstärke 94 aufweist und das zweite Magnetfeld 92 im zweiten Zwischenbereich 72 ebenfalls die zweite Magnetfeldstärke 94 aufweist. Auch in diesem Fall wird der Läufer 20 in der zweiten Zwischenposition 35 waagrecht gehalten, durch die aufgrund der zweiten Magnetfeldstärke 94 erhöhte Tragkraft kann jedoch ausgeglichen werden, dass der Läufer 20 im Bereich des Spalts 30 keine Tragkraft erfährt. Bei einer ungleichmäßigen Beladung des Läufers 20 oder bei einer asymmetrischen Positionierung des Läufers 20 über dem Spalt 30 in der zweiten Zwischenposition 35 kann jeweils die erste Magnetfeldstärke 93 oder die zweite Magnetfeldstärke 94 des ersten Magnetfeldes 91 auch von der jeweils ersten Magnetfeldstärke 93 oder zweiten Magnetfeldstärke 94 des zweiten Magnetfeldes 92 abweichen.

Auch die Steuerung des ersten Magnetfelds 91 beziehungsweise des zweiten Magnetfelds 92 der Fig. 8 bis 10 kann mittels der Steuereinheit 40 der Fig. 1 erfolgen.

## Patentansprüche

1. Verfahren zum Bewegen eines Läufers (20) in einem Planarantriebssystem (1), wobei das Planarantriebssystem (1) ein erstes Statormodul (11), ein zweites Statormodul (12) und einen Läufer (20) aufweist, wobei das erste Statormodul (11) und das zweite Statormodul (12) beabstandet zueinander angeordnet sind, wobei ein Spalt (30) zwischen dem ersten Statormodul (11) und dem zweiten Statormodul (12) ausgebildet ist, wobei durch das erste Statormodul (11) ein erstes Magnetfeld (91) und durch das zweite Statormodul (12) ein zweites Magnetfeld (92) erzeugt werden kann, wobei das erste Magnetfeld (91) beziehungsweise das zweite Magnetfeld (92) den Läufer (20) beabstandet zu einer Oberfläche des ersten Statormoduls (11) und/oder des zweiten Statormoduls (12) in einer Vertikal-Position (24) halten, wobei das erste Magnetfeld (91) beziehungsweise das zweite Magnetfeld (92) eine erste Magnetfeldstärke (93) aufweisen, um den Läufer (20) in der Vertikal-Position (24) zu halten, wobei das erste Magnetfeld (91) und/oder das zweite Magnetfeld (92) ferner zur Veränderung einer Horizontal-Position des Läufers (20) genutzt werden, wobei das erste Statormodul (11) einen ersten Nahbereich (71) angrenzend an den Spalt (30) aufweist, wobei im ersten Nahbereich (71) das erste Magnetfeld (91) eine zweite Magnetfeldstärke (94) aufweist, wobei die zweite Magnetfeldstärke (94) größer als die erste Magnetfeldstärke (93) ist, wenn der Läufer (20) über den Spalt (30) bewegt wird, wobei das erste Magnetfeld (91) eine dritte Magnetfeldstärke (95) in einem ersten Fernbereich (81) aufweist, wobei der erste Fernbereich (81) beabstandet zum Spalt (30) angeordnet ist und wobei die dritte Magnetfeldstärke (95) kleiner ist als die erste Magnetfeldstärke (93), wenn der Läufer (20) über den Spalt (30) bewegt wird, so dass eine fehlende Magnetkraft auf den Läufer (20) im Bereich des Spaltes (30) ausgeglichen und der Läufer in der Vertikal-Position (24) gehalten wird.

2. Verfahren nach Anspruch 1 wobei das erste Magnetfeld (91) im ersten Fernbereich (81) eine Kraft auf den Läufer (20) ausübt, die in umgekehrte Richtung zu der Kraft im Nahbereich (71) wirkt.

3. Verfahren nach einem der Ansprüche 1 oder 2, wobei der Läufer (20) in einer Ausgangsposition (33) komplett über dem ersten Statormodul (11) angeordnet ist und in einer ersten Zwischenposition (34) teilweise über dem ersten Statormodul (11) und teilweise über dem Spalt (30) angeordnet ist, wobei das erste Magnetfeld (91) während sich der Läufer (20) in der Ausgangsposition (33) befindet, über eine Ausdehnung des Läufers (20) nahezu homogen ist und die erste Magnetfeldstärke (93) aufweist und wobei das erste Magnetfeld (91) während sich der Läufer (20) in der ersten Zwischenposition (34) befindet, im ersten Nahbereich (71) die zweite Magnetfeldstärke (94) aufweist.

4. Verfahren nach Anspruch 3, wobei der Läufer (20) in einer zweiten Zwischenposition (35) teilweise über dem ersten Statormodul (11), teilweise über dem Spalt (30) und teilweise über dem zweiten Statormodul (12) angeordnet ist, wobei das erste Magnetfeld (91) und das zweite Magnetfeld (92) den Läufer (20) parallel zur Oberfläche des ersten Statormoduls (11) und/oder des zweiten Statormoduls (12) halten, während sich der Läufer (20) in der zweiten Zwischenposition (35) befindet.

5. Verfahren nach Anspruch 4, wobei das zweite Magnetfeld (92) in einem zweiten Nahbereich (72) des zweiten Statormoduls (12) angrenzend an den Spalt (30) ebenfalls die zweite Magnetfeldstärke (94) aufweist.

6. Verfahren nach Anspruch 4, wobei das zweite Magnetfeld (92) des zweiten Statormoduls (12) in einem zweiten Nahbereich (72) angrenzend an den Spalt (30) und das erste Magnetfeld (91) des ersten Statormoduls (11) im ersten Nahbereich (71) angrenzend an den Spalt (30) die erste Magnetfeldstärke (93) aufweisen.

7. Verfahren nach einem der Ansprüche 3 bis 6, wobei der Läufer (20) in einer dritten Zwischenposition (36) teilweise über dem zweiten Statormodul (12) und teilweise über dem Spalt (30) angeordnet ist, wobei das zweite Magnetfeld (92) im zweiten Nahbereich (72) die zweite Magnetfeldstärke (94) aufweist, wenn sich der Läufer (20) in der dritten Zwischenposition (36) befindet.

8. Verfahren nach einem der Ansprüche 3 bis 7, wobei der Läufer (20) in einer Endposition (37) komplett über dem zweiten Statormodul (12) angeordnet ist und wobei das zweite Magnetfeld (92) während sich der Läufer (20) in der Endposition (37) befindet, über eine Ausdehnung des Läufers (20) nahezu homogen ist.

9. Verfahren nach einem der Ansprüche 1 bis 8, wobei das erste Magnetfeld (91) des ersten Statormoduls (11) und/oder das zweite Magnetfeld (92) des zweiten Statormoduls (12) beim Übergang des Läufers von der Ausgangsposition (33) zur ersten Zwischenposition (34) oder beim Übergang von der ersten Zwischenposition (34) zur zweiten Zwischenposition (35) oder beim Übergang von der zweiten Zwischenposition (35) zur dritten Zwischenposition (36) oder beim Übergang von der dritten Zwischenposition (36) zur Endposition (37) im ersten Nahbereich (71) und/oder im zweiten Nahbereich (72) und/oder im ersten Fernbereich (81) und/oder im zweiten Fernbereich (82) dynamisch zwischen der ersten Magnetfeldstärke (93) und der zweiten Magnetfeldstärke (94) oder der dritten Magnetfeldstärke (95) oder weiteren davon unterschiedlichen Magnetfeldstärken wechseln.

10. Verfahren nach einem der Ansprüche 1 bis 9, wobei eine Positionsbestimmung des Läufers (20) mittels im ersten Statormodul (11) und/oder im zweiten Statormodul (12) verbauten Positionsdetektoren (60) durchgeführt wird und eine Ansteuerung des ersten Statormoduls (11) zur Einstellung des ersten Magnetfelds (91) und/oder eine Ansteuerung des zweiten Statormoduls (12) zur Einstellung des zweiten Magnetfelds (92) anhand der Positionsbestimmung des Läufers (20) erfolgt.

11. Verfahren nach einem der Ansprüche 1 bis 10, wobei das erste Statormodul (11) erste bestrombare Leiterstreifen (54) enthält, wobei das zweite Statormodul (12) zweite bestrombare Leiterstreifen (55) enthält, wobei ein Bestromen der ersten bestrombaren Leiterstreifen (54) zur Ausbildung des ersten Magnetfelds (91) führt und wobei ein Bestromen der zweiten bestrombaren Leiterstreifen (55) zur Ausbildung des zweiten Magnetfelds (92) führt.

12. Planarantriebssystem (1), wobei das Planarantriebssystem (1) ein erstes Statormodul (11), ein zweites Statormodul (12) und einen Läufer (20) aufweist, wobei das erste Statormodul (11) und das zweite Statormodul (12) beabstandet zueinander angeordnet sind, wobei ein Spalt (30) zwischen dem ersten Statormodul (11) und dem zweiten Statormodul (12) ausgebildet ist, wobei das erste Statormodul (11) eingerichtet ist, ein erstes Magnetfeld (91) zu erzeugen und das zweite Statormodul (12) eingerichtet ist, ein zweites Magnetfeld (92) zu erzeugen, wobei das erste Magnetfeld (91) beziehungsweise das zweite Magnetfeld (92) eingerichtet sind, den Läufer (20) beabstandet zu einer Oberfläche des ersten Statormoduls (11) und/oder des zweiten Statormoduls (12) in einer Vertikal-Position (24) zu halten, wobei das erste Magnetfeld (91) beziehungsweise das zweite Magnetfeld (92) eine erste Magnetfeldstärke (93) aufweisen, um den Läufer (20) in der Vertikal-Position (24) zu halten, wobei das erste Magnetfeld (91) und/oder das zweite Magnetfeld (92) ferner zur Veränderung einer Horizontal-Position des Läufers (20) eingerichtet sind, wobei das erste Statormodul (11) einen ersten Nahbereich (71) angrenzend an den Spalt (30) aufweist, wobei im ersten Nahbereich (71) das erste Magnetfeld (91) eine zweite Magnetfeldstärke (94) aufweist, wobei die zweite Magnetfeldstärke (94) größer als die erste Magnetfeldstärke (93) ist, wenn der Läufer (20) über den Spalt (30) bewegt wird, wobei das erste Magnetfeld (91) eine dritte Magnetfeldstärke (95) in einem ersten Fernbereich (81) aufweist, wobei der erste Fernbereich (81) beabstandet zum Spalt (30) angeordnet ist und wobei die dritte Magnetfeldstärke (95) kleiner ist als die erste Magnetfeldstärke (93), wenn der Läufer (20) über den Spalt (30) bewegt wird, so dass eine fehlende Magnetkraft auf den Läufer (20) im Bereich des Spaltes (30) ausgeglichen und der Läufer in der Vertikal-Position (24) gehalten wird, wobei das Planarantriebssystem (1) weiter eine Steuereinheit (40) umfassend eine Recheneinheit (42) und Kommunikationsmittel (43) aufweist, wobei die Kommunikationsmittel (43) zum Einlesen von Signalen von Positionsdetektoren (60) der Statormodule (10) und zum Ausgeben von Steuerungssignalen für die Statormodule (10) dienen können, wobei die Steuereinheit (40) eingerichtet ist, anhand der Signale der Positionsdetektoren (60) und einem für den Läufer (20) vorgegebenen Fahrweg über den zwischen zwei Statormodulen (10) angeordneten Spalt (30) hinweg ein Steuerungssignal zur Steuerung von Magnetfeldern der Statormodule (10) an die Statormodule (10) derart auszugeben, dass die durch die Statormodule (10) erzeugten Magnetfelder während einer Überquerung des Spalts (30) zumindest zeitweise variiert werden.

13. Computerprogramm, umfassend Programmcode, der ausgeführt auf einem Computer diesen dazu veranlasst, das Verfahren nach einem der Ansprüche 1 bis 11 zur Ansteuerung eines Planarantriebssystems (1) durchzuführen.

14. Steuereinheit (40) zur Ansteuerung eines Planarantriebssystems nach Anspruch 12, umfassend eine Recheneinheit (42) und Kommunikationsmittel (43), wobei die Kommunikationsmittel (43) zum Einlesen von Signalen von Positionsdetektoren (60) von Statormodulen (10) und zum Ausgeben von Steuerungssignalen für die Statormodule (10) eingerichtet sind, wobei die Recheneinheit (42) eingerichtet ist, die Steuersignale nach dem Verfahren nach einem der Ansprüche 1 bis 11 zu erzeugen, wobei die Steuereinheit (40) eingerichtet ist, anhand der Signale der Positionsdetektoren (60) und einem für einen Läufer (20) vorgegebenen Fahrweg über einen zwischen zwei Statormodulen (10) angeordneten Spalt (30) hinweg ein Steuerungssignal zur Steuerung von Magnetfeldern der Statormodule (10) an die Statormodule (10) derart auszugeben, dass die durch die Statormodule (10) erzeugten Magnetfelder während einer Überquerung des Spalts (30) zumindest zeitweise variiert werden.

## Claims

1. Method for moving a rotor (20) in a planar drive system (1), wherein the planar drive system (1) has a first stator module (11), a second stator module (12) and a rotor (20), wherein the first stator module (11) and the second stator module (12) are arranged in a manner spaced from one another, wherein a gap (30) is formed between the first stator module (11) and the second stator module (12), wherein a first magnetic field (91) is able to be generated by the first stator module (11) and a second magnetic field (92) is able to be generated by the second stator module (12), wherein the first magnetic field (91) and/or the second magnetic field (92) keep the rotor (20) in a vertical position (24) in a manner spaced from a surface of the first stator module (11) and/or of the second stator module (12), wherein the first magnetic field (91) and/or the second magnetic field (92) have a first magnetic field strength (93) in order to keep the rotor (20) in the vertical position (24), wherein the first magnetic field (91) and/or the second magnetic field (92) are furthermore used to modify a horizontal position of the rotor (20), wherein the first stator module (11) has a first proximal region (71) adjoining the gap (30), wherein the first magnetic field (91) has a second magnetic field strength (94) in the first proximal region (71), wherein the second magnetic field strength (94) is greater than the first magnetic field strength (93) when the rotor (20) is moved over the gap (30), wherein the first magnetic field (91) has a third magnetic field strength (95) in a first distal region (81), wherein the first distal region (81) is arranged in a manner spaced from the gap (30) and wherein the third magnetic field strength (95) is smaller than the first magnetic field strength (93) when the rotor (20) is moved over the gap (30), so as to compensate for a lack of magnetic force on the rotor (20) in the region of the gap (30) and to hold the rotor in the vertical position (24).

2. Method according to Claim 1, wherein the first magnetic field (91), in the first distal region (81), exerts a force on the rotor (20) that acts in the opposite direction to the force in the proximal region (71).

3. Method according to either of Claims 1 and 2, wherein the rotor (20), in a starting position (33), is arranged completely above the first stator module (11) and, in a first intermediate position (34), is arranged partially above the first stator module (11) and partially above the gap (30), wherein the first magnetic field (91) is almost homogeneous over an extent of the rotor (20) while the rotor (20) is in the starting position (33) and has the first magnetic field strength (93), and wherein the first magnetic field (91) has the second magnetic field strength (94) in the first proximal region (71) while the rotor (20) is in the first intermediate position (34).

4. Method according to Claim 3, wherein the rotor (20), in a second intermediate position (35), is arranged partially above the first stator module (11), partially above the gap (30) and partially above the second stator module (12), wherein the first magnetic field (91) and the second magnetic field (92) keep the rotor (20) parallel to the surface of the first stator module (11) and/or of the second stator module (12) while the rotor (20) is in the second intermediate position (35).

5. Method according to Claim 4, wherein the second magnetic field (92) likewise has the second magnetic field strength (94) in a second proximal region (72) of the second stator module (12) adjoining the gap (30).

6. Method according to Claim 4, wherein the second magnetic field (92) of the second stator module (12) has the first magnetic field strength (93) in a second proximal region (72) adjoining the gap (30) and the first magnetic field (91) of the first stator module (11) has the first magnetic field strength (93) in the first proximal region (71) adjoining the gap (30).

7. Method according to one of Claims 3 to 6, wherein the rotor (20), in a third intermediate position (36), is arranged partially above the second stator module (12) and partially above the gap (30), wherein the second magnetic field (92) has the second magnetic field strength (94) in the second proximal region (72) when the rotor (20) is in the third intermediate position (36).

8. Method according to one of Claims 3 to 7, wherein the rotor (20), in an end position (37), is arranged completely above the second stator module (12), and wherein the second magnetic field (92) is almost homogeneous over an extent of the rotor (20) while the rotor (20) is in the end position (37).

9. Method according to one of Claims 1 to 8, wherein the first magnetic field (91) of the first stator module (11) and/or the second magnetic field (92) of the second stator module (12) alternate dynamically between the first magnetic field strength (93) and the second magnetic field strength (94) or the third magnetic field strength (95) or further magnetic field strengths different therefrom in the first proximal region (71) and/or in the second proximal region (72) and/or in the first distal region (81) and/or in the second distal region (82) upon the transition of the rotor from the starting position (33) to the first intermediate position (34) or upon the transition from the first intermediate position (34) to the second intermediate position (35) or upon the transition from the second intermediate position (35) to the third intermediate position (36) or upon the transition from the third intermediate position (36) to the end position (37).

10. Method according to one of Claims 1 to 9, wherein a position of the rotor (20) is determined by way of position detectors (60) installed in the first stator module (11) and/or in the second stator module (12) and the first stator module (11) is actuated so as to set the first magnetic field (91) and/or the second stator module (12) is actuated so as to set the second magnetic field (92) on the basis of the determination of the position of the rotor (20).

11. Method according to one of Claims 1 to 10, wherein the first stator module (11) contains first energizable conductor strips (54), wherein the second stator module (12) contains second energizable conductor strips (55), wherein energization of the first energizable conductor strips (54) leads to the formation of the first magnetic field (91) and wherein energization of the second energizable conductor strips (55) leads to the formation of the second magnetic field (92).

12. Planar drive system (1), wherein the planar drive system (1) has a first stator module (11), a second stator module (12) and a rotor (20), wherein the first stator module (11) and the second stator module (12) are arranged in a manner spaced from one another, wherein a gap (30) is formed between the first stator module (11) and the second stator module (12), wherein the first stator module (11) is designed to generate a first magnetic field (91) and the second stator module (12) is designed to generate a second magnetic field (92), wherein the first magnetic field (91) and/or the second magnetic field (92) are designed to keep the rotor (20) in a vertical position (24) in a manner spaced from a surface of the first stator module (11) and/or of the second stator module (12), wherein the first magnetic field (91) and/or the second magnetic field (92) have a first magnetic field strength (93) in order to keep the rotor (20) in the vertical position (24), wherein the first magnetic field (91) and/or the second magnetic field (92) are furthermore designed to modify a horizontal position of the rotor (20), wherein the first stator module (11) has a first proximal region (71) adjoining the gap (30), wherein the first magnetic field (91) has a second magnetic field strength (94) in the first proximal region (71), wherein the second magnetic field strength (94) is greater than the first magnetic field strength (93) when the rotor (20) is moved over the gap (30), wherein the first magnetic field (91) has a third magnetic field strength (95) in a first distal region (81), wherein the first distal region (81) is arranged in a manner spaced from the gap (30) and wherein the third magnetic field strength (95) is smaller than the first magnetic field strength (93) when the rotor (20) is moved over the gap (30), so as to compensate for a lack of magnetic force on the rotor (20) in the region of the gap (30) and to hold the rotor in the vertical position (24), wherein the planar drive system (1) further comprises a controller (40) having a computing unit (42) and communication devices (43), wherein the communication devices (43) may serve for reading in signals of position detectors (60) of the stator modules (10) and for outputting control signals for the stator modules (10), wherein the controller (40) is set up to output a control signal for controlling magnetic fields of the stator modules (10) to the stator modules (10) on the basis of the signals of the position detectors (60) and of a travel path provided for the rotor (20) over the gap (30) arranged between two stator modules (10) in such a way that the magnetic fields generated by the stator modules (10) are at least temporarily varied while traversing the gap (30).

13. Computer program comprising program code that, when executed on a computer, prompts said computer to perform the method according to one of Claims 1 to 11 for actuating a planar drive system (1).

14. Control unit (40) for actuating a planar drive system according to Claim 12, comprising a computing unit (42) and communication means (43), wherein the communication means (43) are designed to read in signals from position detectors (60) of stator modules (10) and to output control signals for the stator modules (10), wherein the computing unit (42) is designed to generate the control signals in accordance with the method according to one of Claims 1 to 11, wherein the control unit (40) is designed, on the basis of the signals from the position detectors (60) and a path across a gap (30) arranged between two stator modules (10) and predefined for a rotor (20), to output a control signal for controlling magnetic fields of the stator modules (10) to the stator modules (10) such that the magnetic fields generated by the stator modules (10) are at least temporarily varied while crossing the gap (30).

## Revendications

1. Procédé permettant de déplacer un rotor (20) dans un système d'entraînement planétaire (1), dans lequel le système d'entraînement planétaire (1) présente un premier module de stator (11), un deuxième module de stator (12) et un rotor (20), dans lequel le premier module de stator (11) et le deuxième module de stator (12) sont disposés à distance l'un de l'autre, dans lequel un entrefer (30) est réalisé entre le premier module de stator (11) et le deuxième module de stator (12), dans lequel le premier module de stator (11) permet de produire un premier champ magnétique (91) et le deuxième module de stator (12) permet de produire un deuxième champ magnétique (92), dans lequel le premier champ magnétique (91) ou le deuxième champ magnétique (92) respectivement maintient le rotor (20) dans une position verticale (24) à distance d'une surface du premier module de stator (11) et/ou du deuxième module de stator (12), dans lequel le premier champ magnétique (91) ou le deuxième champ magnétique (92) respectivement présente une première intensité (93) de champ magnétique afin de maintenir le rotor (20) dans la position verticale (24), dans lequel le premier champ magnétique (91) et/ou le deuxième champ magnétique (92) sont en outre utilisés pour modifier une position horizontale du rotor (20), dans lequel le premier module de stator (11) présente une première zone proche (71) adjacente à l'entrefer (30), dans lequel le premier champ magnétique (91) présente une deuxième intensité (94) de champ magnétique dans la première zone proche (71), dans lequel la deuxième intensité (94) de champ magnétique est supérieure à la première intensité (93) de champ magnétique si le rotor (20) est déplacé au-dessus de l'entrefer (30), dans lequel le premier champ magnétique (91) présente une troisième intensité (95) de champ magnétique dans une première zone éloignée (81), dans lequel la première zone éloignée (81) est disposée à distance de l'entrefer (30), et dans lequel la troisième intensité (95) de champ magnétique est inférieure à la première intensité (93) de champ magnétique si le rotor (20) est déplacé au-dessus de l'entrefer (30) de telle sorte qu'une force magnétique manquante sur le rotor (20) est compensée dans la zone de l'entrefer (30) et le rotor est maintenu dans la position verticale (24).

2. Procédé selon la revendication 1, dans lequel le premier champ magnétique (91) exerce dans la première zone éloignée (81) une force sur le rotor (20) qui agit dans la direction opposée à la force dans la zone proche (71) .

3. Procédé selon l'une quelconque des revendications 1 ou 2, dans lequel le rotor (20) dans une position de départ (33) est disposé complètement au-dessus du premier module de stator (11) et dans une première position intermédiaire (34) est disposé partiellement au-dessus du premier module de stator (11) et partiellement au-dessus de l'entrefer (30), dans lequel, pendant que le rotor (20) se trouve dans la position de départ (33), le premier champ magnétique (91) est presque homogène sur une extension du rotor (20) et présente la première intensité de champ magnétique (93), et dans lequel, pendant que le rotor (20) se trouve dans la première position intermédiaire (34), le premier champ magnétique (91) présente la deuxième intensité de champ magnétique (94) dans la première zone proche (71).

4. Procédé selon la revendication 3, dans lequel, dans une deuxième position intermédiaire (35), le rotor (20) est disposé partiellement au-dessus du premier module de stator (11), partiellement au-dessus de l'entrefer (30) et partiellement au-dessus du deuxième module de stator (12), dans lequel le premier champ magnétique (91) et le deuxième champ magnétique (92) maintiennent le rotor (20) en parallèle à la surface du premier module de stator (11) et/ou du deuxième module de stator (12) pendant que le rotor (20) se trouve dans la deuxième position intermédiaire (35).

5. Procédé selon la revendication 4, dans lequel le deuxième champ magnétique (92) présente la deuxième intensité de champ magnétique (94) aussi dans une deuxième zone proche (72) du deuxième module de stator (12), adjacente à l'entrefer (30).

6. Procédé selon la revendication 4, dans lequel le deuxième champ magnétique (92) du deuxième module de stator (12) présente la première intensité de champ magnétique (93) dans une deuxième zone proche (72) adjacente à l'entrefer (30) et le premier champ magnétique (91) du premier module de stator (11) la présente dans la première zone proche (71) adjacente à l'entrefer (30).

7. Procédé selon l'une quelconque des revendications 3 à 6, dans lequel, dans une troisième position intermédiaire (36), le rotor (20) est disposé partiellement au-dessus du deuxième module de stator (12) et partiellement au-dessus de l'entrefer (30), dans lequel le deuxième champ magnétique (92) présente la deuxième intensité de champ magnétique (94) dans la deuxième zone proche (72) si le rotor (20) se trouve dans la troisième position intermédiaire (36).

8. Procédé selon l'une quelconque des revendications 3 à 7, dans lequel, dans une position d'extrémité (37), le rotor (20) est disposé complètement au-dessus du deuxième module de stator (12), et dans lequel, pendant que le rotor (20) se trouve dans la position d'extrémité (37), le deuxième champ magnétique (92) est presque homogène sur une extension du rotor (20).

9. Procédé selon l'une quelconque des revendications 1 à 8, dans lequel le premier champ magnétique (91) du premier module de stator (11) et/ou le deuxième champ magnétique (92) du deuxième module de stator (12), lors du passage du rotor de la position de départ (33) à la première position intermédiaire (34) ou lors du passage de la première position intermédiaire (34) à la deuxième position intermédiaire (35) ou lors du passage de la deuxième position intermédiaire (35) à la troisième position intermédiaire (36) ou lors du passage de la troisième position intermédiaire (36) à la position d'extrémité (37), dans la première zone proche (71) et/ou dans la deuxième zone proche (72) et/ou dans la première zone éloignée (81) et/ou dans la deuxième zone éloignée (82), alternent de façon dynamique entre la première intensité de champ magnétique (93) et la deuxième intensité de champ magnétique (94) ou la troisième intensité de champ magnétique (95) ou d'autres forces de champ magnétique différentes de celles-ci.

10. Procédé selon l'une quelconque des revendications 1 à 9, dans lequel une détermination de position du rotor (20) est effectuée au moyen de détecteurs de position (60) installés dans le premier module de stator (11) et/ou dans le deuxième module de stator (12), et un pilotage du premier module de stator (11) pour le réglage du premier champ magnétique (91) et/ou un pilotage du deuxième module de stator (12) pour le réglage du deuxième champ magnétique (92) ont lieu à l'aide de la détermination de position du rotor (20).

11. Procédé selon l'une quelconque des revendications 1 à 10, dans lequel le premier module de stator (11) comporte des premières bandes conductrices (54) pouvant être alimentées en courant, dans lequel le deuxième module de stator (12) comporte des deuxièmes bandes conductrices (55) pouvant être alimentées en courant, dans lequel une alimentation en courant des premières bandes conductrices (54) pouvant être alimentées en courant conduit à la réalisation du premier champ magnétique (91), et dans lequel une alimentation en courant des deuxièmes bandes conductrices (55) pouvant être alimentées en courant conduit à la réalisation du deuxième champ magnétique (92).

12. Système d'entraînement planétaire (1), dans lequel le système d'entraînement planétaire (1) présente un premier module de stator (11), un deuxième module de stator (12) et un rotor (20), dans lequel le premier module de stator (11) et le deuxième module de stator (12) sont disposés à distance l'un de l'autre, dans lequel un entrefer (30) est réalisé entre le premier module de stator (11) et le deuxième module de stator (12), dans lequel le premier module de stator (11) est conçu pour produire un premier champ magnétique (91) et le deuxième module de stator (12) est conçu produire un deuxième champ magnétique (92), dans lequel le premier champ magnétique (91) ou le deuxième champ magnétique (92) respectivement est conçu pour maintenir le rotor (20) dans une position verticale (24) à distance d'une surface du premier module de stator (11) et/ou du deuxième module de stator (12), dans lequel le premier champ magnétique (91) ou le deuxième champ magnétique (92) respectivement présente une première intensité (93) de champ magnétique afin de maintenir le rotor (20) dans la position verticale (24), dans lequel le premier champ magnétique (91) et/ou le deuxième champ magnétique (92) sont en outre conçus pour modifier une position horizontale du rotor (20), dans lequel le premier module de stator (11) présente une première zone proche (71) adjacente à l'entrefer (30), dans lequel le premier champ magnétique (91) présente une deuxième intensité (94) de champ magnétique dans la première zone proche (71), dans lequel la deuxième intensité (94) de champ magnétique est supérieure à la première intensité (93) de champ magnétique si le rotor (20) est déplacé au-dessus de l'entrefer (30), dans lequel le premier champ magnétique (91) présente une troisième intensité (95) de champ magnétique dans une première zone éloignée (81), dans lequel la première zone éloignée (81) est disposée à distance de l'entrefer (30), et dans lequel la troisième intensité (95) de champ magnétique est inférieure à la première intensité (93) de champ magnétique si le rotor (20) est déplacé au-dessus de l'entrefer (30) de sorte qu'une force magnétique manquante sur le rotor (20) est compensée dans la zone de l'entrefer (30) et le rotor est maintenu dans la position verticale (24), dans lequel le système d'entraînement planétaire (1) présente par ailleurs une unité de commande (40) comprenant une unité de calcul (42) et des moyens de communication (43), dans lequel les moyens de communication (43) peuvent servir à lire des signaux provenant de détecteurs de position (60) des modules de stator (10) et pour émettre des signaux de commande pour les modules de stator (10), dans lequel l'unité de commande (40) est conçue pour émettre aux modules de stator (10) un signal de commande pour la commande de champs magnétiques des modules de stator (10) à l'aide des signaux des détecteurs de position (60) et d'une course prévue pour le rotor (20) au-delà de l'entrefer (30) disposé entre deux modules de stator (10) de telle sorte que les champs magnétiques produits par les modules de stator (10) varient au moins temporairement pendant un franchissement de l'entrefer (30) .

13. Programme informatique, comprenant du code programme qui, lorsqu'il est exécuté sur un ordinateur, fait que celui-ci exécute le procédé selon l'une quelconque des revendications 1 à 11 pour le pilotage d'un système d'entraînement planétaire (1).

14. Unité de commande (40) pour piloter un système d'entraînement planétaire selon la revendication 12, comprenant une unité de calcul (42) et des moyens de communication (43), dans lequel les moyens de communication (43) sont conçus pour lire des signaux provenant de détecteurs de position (60) de modules de stator (10) et pour émettre des signaux de commande pour les modules de stator (10), dans lequel l'unité de calcul (42) est conçue pour produire les signaux de commande selon le procédé selon l'une quelconque des revendications 1 à 11, dans lequel, à l'aide des signaux des détecteurs de position (60) et d'une course prévue pour un rotor (20) au-delà d'un entrefer (30) disposé entre deux modules de stator (10), l'unité de commande (40) est conçue pour émettre aux modules de stator (10) un signal de commande pour la commande de champs magnétiques des modules de stator (10) de telle sorte les champs magnétiques produits par les modules de stator (10) varient au moins temporairement pendant un franchissement de l'entrefer (30).
